# EUROPEAN PATENT SPECIFICATION

(11) **EP 2 819 076 B1**
(45) Date of publication and mention of the grant of the patent: **18.12.2019**
(21) Application number: 13173465.9
(22) Date of filing: 24.06.2013
(51) Int. Cl.: G06Q 20/32

(54) **Controlling transactions using near field communications device**
Steuerung von Transaktionen unter Verwendung einer Nahfeldkommunikationsvorrichtung
Commander des transactions à l'aide d'un dispositif de communication en champ proche

(43) Date of publication of application: 31.12.2014
(73) Proprietor: BlackBerry Limited, Waterloo, ON N2K 0A7 (CA)
(72) Inventor: Rogan, Michael John, Waterloo, Ontario N2L 3W8 (CA)
(74) Representative: MERH-IP Matias Erny Reichl Hoffmann Patentanwälte PartG mbB

(56) References cited:
- WO-A2-2010/039337
- US-A1- 2006 080 232
- US-B1- 6 587 835

## Description

### Field of the Disclosure

This application relates to the field of communications, and more particularly, to the use Near Field Communications (NFC) and other short range wireless communications protocols in controlling point of sale transactions.

### Background

A recent trend in mobile communications has been to incorporate Near Field Communication (NFC) and other short-range wireless communications protocols into mobile devices and other communications systems and components. NFC and other short-range communications devices (hereinafter collectively "NFC-capable devices") can initiate and execute fully and/or semi-automatic wireless data transfers by being brought into or otherwise placed in sufficiently close proximity, or in some embodiments by brief, controlled contact, or device "kissing."

Systems, devices, and methods adapted for NFC and other short-range communications processes can be applied in a wide variety of uses. Such uses can, for example, include the negotiation and conclusion of purchase and other transactions at the point of sale (POS) in stores, theaters, stadiums, and other vendor locations.
US 2006/0080232 A1 discloses a cellular telephone which is configured as a payment device for purchases from merchants, service providers and fast food establishments.
US 6,587,835 B1 discloses a system in which a handheld computing device may be used to provide a user with shopping assistance services, e.g. directory information for a shopping mall; in order to handle shopping lists and provide the user with information regarding where to pay less.

There is need, however, for enabling administrative users of NFC-capable devices, and particularly NFC-capable mobile communication devices, to control the use of such devices in negotiating and completing transactions at the POS, particularly when used by non-administrative users, and for improved processes of doing so.

### Summary

The present invention is defined by a method, device and storage medium for executing a NFC mobile payment application according to claims 1-17.

### Description of drawings

Examples of various aspects and embodiments of the invention are shown in the drawings, and described therein and elsewhere throughout the disclosure. In the drawings, like references indicate like parts.
Figures 1-3 are schematic diagrams of example systems and devices useful in implementing various aspects of the disclosure.
Figures 4 and 5 are schematic flow diagrams showing examples of processes in accordance with aspects of the disclosure.

### Detailed Description

In various aspects, the disclosure provides systems, methods, devices, and computer programming products for controlling transactions using near field communications devices. Controlling the transactions may include a determination of whether data representing terms of a proposed transaction are authorized in view of one or more transaction restrictions accessed in a secure memory of a device.

For example, in a first aspect, the disclosure provides methods, performed by a near-field communication (NFC) enabled device, comprising: accessing, in secure memory of the mobile communication device, data representing at least one transaction restriction associated with an authorized user of the mobile communication device; using the at least one accessed transaction restriction, determining whether a transaction data set representing terms of a proposed transaction is authorized; and if the transaction is authorized, transmitting to a networked payment processing resource data representing terms associated with the transaction data set and a payment request.

In another aspect, the disclosure provides NFC-enabled devices comprising: a secure memory; a processor; a medium or media including machine-readable instructions executable by the processor for: accessing, in the secure memory of the mobile communication device, data representing at least one transaction restriction associated with an authorized user of the mobile communication device; using the at least one accessed transaction restriction, determining whether a transaction data set representing terms of a proposed transaction is authorized; and if the transaction is authorized, transmitting to a networked payment processing resource data representing terms associated with the transaction data set and a payment request.

In other aspects, the disclosure provides computer program products having a non-transitory computer readable medium tangibly embodying computer executable code which, when executed by a processor of a NFC-enabled device or networked storage resource, causes the respective device or resource to perform the aforementioned methods.

Near-field communication(s) (NFC) are wireless communications between two or more suitably-configured devices when the devices are placed or otherwise disposed within a desired, typically relatively proximity to one another. Such communications can, for example, be initiated on a fully or partially automatic basis when the two or more devices are placed within desired proximity of one another, and can occur between any two or more of active and/or passive NFC devices.

As will be appreciated by those skilled in the relevant arts, once they have been made familiar with this disclosure, NFC communications in accordance with this disclosure can be conducted according to any suitable protocols, including a number of protocols now in widespread public use, as well as protocols yet to be developed.

In general, an NFC transaction, or data transfer, may be initiated by bringing two or more NFC-enabled devices into close proximity of one another. "Close proximity" can, as will be apparent to those skilled in the relevant arts, once they have been made familiar with this disclosure, mean any proximity suitable to a desired purpose, and typically means sufficiently close that it may be presumed that communications between the two or more NFC devices is desired. For current NFC applications, for example, "close proximity" can mean one or several centimeters, or shorter or longer distances, depending for example upon the purpose and nature of the NFC transaction and the NFC-enabled devices. The action of bringing such NFC-enabled devices into sufficiently close proximity may trigger automatic or semi-automatic activation of an NFC circuit, and/or an NFC communication. A NFC transaction, or NFC data transfer, may include one NFC-enabled device transferring data to the other, or two or more devices each transferring and/or receiving data from at least one of the other devices. Where devices both transmit and receive data from one another through an NFC transaction, this may be called a NFC data interchange.

For purposes of this disclosure, NFC communications may be conducted according to any desired wireless communications protocol(s), including for example those published or otherwise adopted by the various NFC and/or Radio Frequency Identification (RFID) industry federations, councils, groups, and boards, and their members, as well as any or all of Bluetooth or WIN wireless protocols, including for example any or all of Code Division Multiple Access (CDMA), Time Division Multiple Access (TDMA), Frequency Division Multiple Access (FDMA), Orthogonal Frequency Division Multiple Access (OFDMA), Single Carrier Frequency Division Multiple Access (SC-FDMA), GSM, 3GPP, 4G, or other wireless protocols.

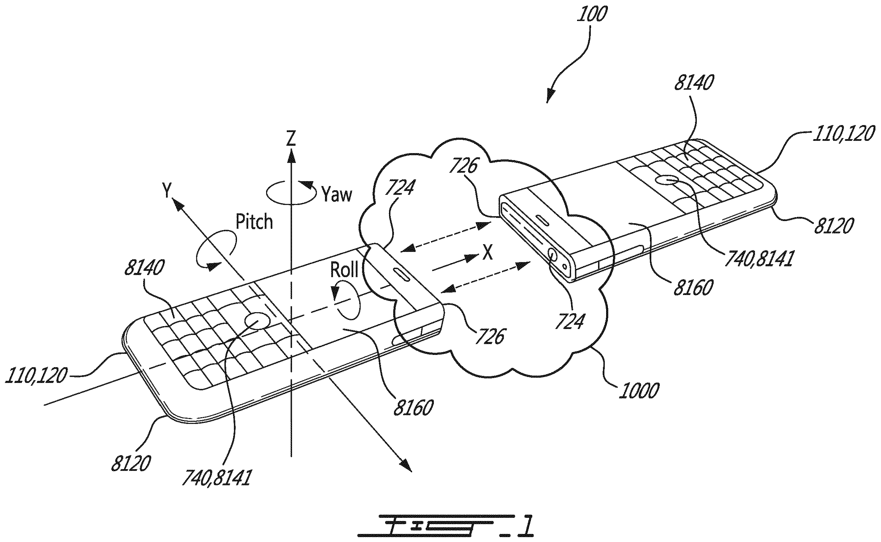

An example of an NFC system 100 suitable for use in implementing various aspects of the disclosure is shown in Figure 1. In the embodiment shown in Figure 1, system 100 comprises two active NFC devices 110, in the form of smartphones or other wireless handheld or mobile devices 120. Bringing active NFC-capable devices 110, 120 close enough together, by for example moving them physically toward each other into very close proximity, or into actual physical contact, can provide an operationally easy interface to set up, and initiate a wireless NFC connection.

For example, in the embodiment illustrated in Figure 1, relative movement of the devices 110, 120 toward one another may induce the Hall effect in a magnetic field sensor incorporated within one or both of the devices, and so trigger execution of an NFC query and authorization process and, conditioned upon authorization, establishment of a uni- or bi-directional wireless communication session between the devices. In one non-limiting example, one or both of devices 110, 120 is provided with either a magnet 724 or a magnetometer, i.e., a magnet sensor 726, such as a Hall effect sensor or magneto-resistive sensor, or both. The devices 724, 726 may be matched in a single touch or other gesture adapted to bring the devices into suitably close proximity (sometimes termed a "kiss" gesture because the two devices 110, 120 typically touch or "kiss" each other or are very close and in adjacent proximity).

An example of a suitable proximity for such embodiments may be in the range of about 10 to 20 mm, but the range may be more or less depending on the strength of the magnets and the purposes for which the device(s) 110, 120 and/or system 100 is intended. The sensor(s) 726 on each device 110, 120 may be aligned to the magnet on the respective other device, as illustrated in Figure 1. One or both of the sensors 726 senses ("sees") the corresponding magnet 724 pursuant to the Hall effect, causing a voltage variation or other signal to be generated by the sensor and transmitted to a processor, so as to activate an NFC circuit to communicate with the other device using the protocol of an associated NFC Stack or other wireless communication(s) subsystem or device(s). The devices 110 can then communicate with each other using any NFC protocol suitable for the intended purpose.

Establishment of NFC communications sessions between the devices 110, 120 can be conditioned on suitably-adapted authorizations, using, for example, PIN numbers and/or other security keys.

Interaction between active NFC devices 110 as shown, for example, in Figure 1, can be considered peer-to-peer NFC interactions.

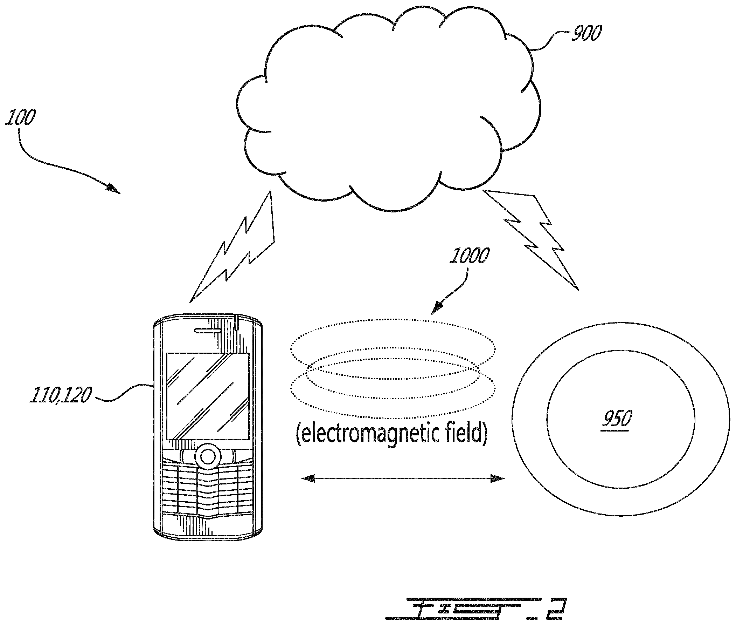

Figure 2 illustrates an example of another NFC system 100 suitable for use in implementing various aspects of the disclosure. In the embodiment shown in Figure 2, system 100 comprises an active NFC device 110, in the form of a smartphone or other wireless handheld or mobile device 120, and a passive NFC device 950 such as an RFID or other NFC tag, which may for example be attached to an NFC poster, or 'smart' poster. Bringing an active NFC-capable device 110, 120 close enough to a passive device 950 such as a tag embedded within or otherwise attached to a poster can cause query, authorization, and/or data transfer processes to fully or semi-automatically execute using magnets, Hall effect sensors, and/or other proximity-detecting mechanisms as described above and elsewhere herein.

In some embodiments, an active 110, 120 or passive device 950 can be actively powered or can include a battery-less and/or passive NFC card. An NFC card may include an NFC chip, such as a memory-based chip or a processor-based chip, and an NFC antenna which, in some examples, can be tuned for 13.56 MHz. The NFC chip can be adapted to carry out actions necessary for communication using the NFC protocol including but not limited to modulation, demodulation, encoding and decoding. Suitable NFC chips for this application may include chips using MIFARE® technology from Koninklijke Philips Electronics N.Y. of the Netherlands and chips using FeliCa™ technology from Sony Corporation of Japan. The NFC card can be embedded in a poster or any other device, apparatus or structure.

A passive NFC device 950 in accordance with the invention can comprise memory(ies), including both volatile and persistent (i.e., non-transient) media for storing data readable by active NFC (i.e., wireless) device(s) 110, 112. Data stored by passive device(s) 950 and read by active device(s) 110, 112 can include any data suitable for desired purpose(s). For example, a passive device 950 affixed to an informational document such as an advertising or instructional poster can store, for reading by one or more active device(s) 110, any information desired to be imparted to the device(s) 110 and/or users thereof. For example, a device 950 affixed to an advertising poster can store information related to a product, such as an item of clothing, an entertainment event, or a food product purchasable by a user of a device 110.

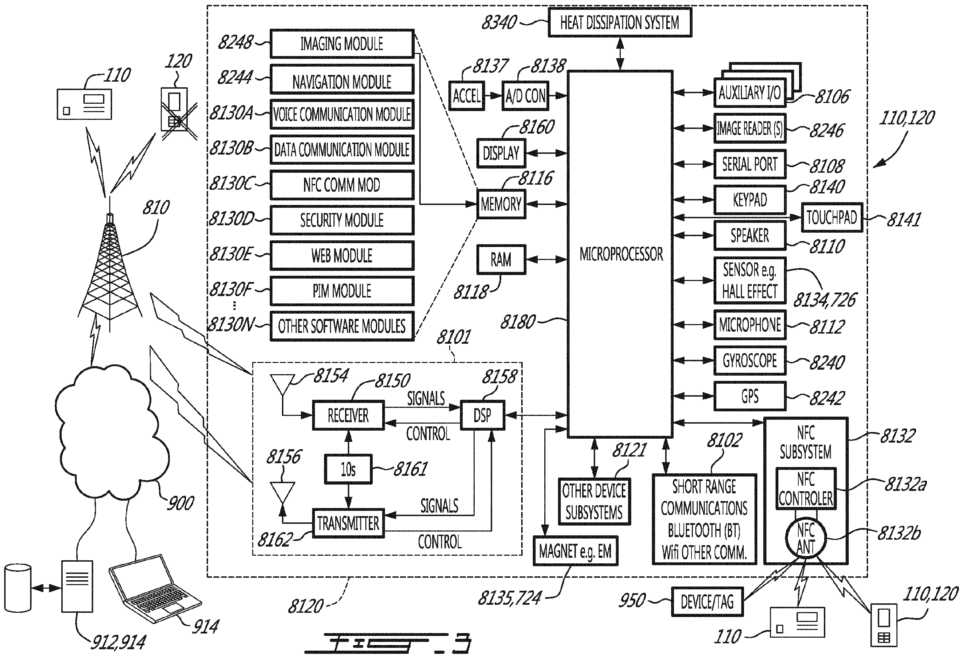

Alternatively, or in addition, a device 950 can store data such as a uniform resource locator (URL) or other address information, such as a telephone number, readable by active device(s) 110 and suitable for directing a processor associated with the device(s) 110 to establish one or more uni- or multi-direction communications sessions with commonly-controlled and/or third-party resources via one or more networks 900, as shown in Figures 2 and 3.

Such networked resources can, for example, include vendor, enterprise, or other servers, computers, smartphones, etc.

In some embodiments, any of the active 110, 120 or passive 950 device(s) described herein can be part of a point-of-sale (POS) system or terminal.

A somewhat more general embodiment of a system 100 for implementing aspects of the disclosure is shown schematically in Figure 3. In the embodiment of Figure 3, an active wireless handheld device 110, 120 is configured for communication with a wide variety of external devices via a number of communications (sub)systems. For example, using an NFC (sub)system 8132, the device 110 is configured to communicate with any one or more of passive NFC device(s) 950, such as RFID or other NFC tags; optionally non-mobile active device(s) 110, such as stationary computers or other devices, including for example vendor point-of-sale transaction devices); and/or NFC-capable mobile devices 120 such as smartphones and/or laptop, palmtop, and/or tablet computers.

As explained further below, the device 110, 120 shown in Figure 3 is further capable, via wireless communications (sub)system 8101, of communicating with a wide range of devices, including for example server(s) 912 and/or other computers 914 via the internet, the public switched telephone network (PSTN) and/or other wired wide-area or local-area public or private network(s) 900, and/or one or more smartphones, computers 914, servers 912, and other active systems 110 via cellular and/or other wireless telephone networks. For example, an active NFC device 110, 120 may be communicatively coupled to one or more wireless local area networks (WLANs), such as a Wireless Fidelity (Wi-Fi) network, or a wireless wide area network (WWAN) such as 3GPP or 4G Long Term Evolution (LTE) network (not shown). By way of non-limiting example, and as will be appreciated by those skilled in the relevant arts, Wi-Fi is typically deployed as a WLAN that may extend home and business networks to wireless medium and may follow an IEEE 802.11 or other standard. A wireless communications connection may also be established using, for example, short-range communications subsystems which may include an infrared device and associated circuits and components as described above, or a Bluetooth communications module, to provide for communication with similarly-enabled systems and devices as well as the NFC communications.

Figure 3 shows a non-limiting example of a range of various functional components that may be included in an exemplary handheld or other mobile wireless communications device 120. In the example shown, device 110, 120 includes, among other components, housing(s) 8120; input device(s) such as keypad(s) 8140, touchpads 8141 / 740, microphone(s) 8112, accelerometer(s) 8137, analog/digital (a/d) converter(s) 8138, touchscreen display(s) 8160, hall effect or other field/proximity sensor(s) 8134, 726, gyroscope(s) 8240, global positioning system(s) (GPS(s)) 8242, and optical or image reader(s) 8246, such as one or more digital still and video cameras and/or barcode readers, quick response (QR) readers, or other scanners; output device(s) such as touchscreen or other display(s) 8160, speakers(s) 8110, and magnet(s) or other field/proximity generator(s) 8135, 724; and input/output (1/0) device(s) such as uniform serial bus (USB) auxiliary input/output port(s) 8106, parallel or serial port(s) 8108, NFC (sub)system(s) 8132, including Bluetooth and/or other short-range communication (sub)system(s), and wireless/radio transceiver (sub)system(s) 8101.

As will occur to those skilled in the relevant arts, device(s) 110, 120 may include any of a wide variety of these and other components and (sub)systems, in any desired combination(s); and they may interact in any of a wide variety of ways, in addition to those described herein.

As will further be understood by those skilled in the relevant arts, handheld device(s) 120 can comprise any of a very wide range of mobile devices, including for example cellphones, smartphones, wired or wireless POS terminals, and other radio-based communications devices, as well as laptop, palmtop, and tablet computers. "Handheld" means portable and operable using one or both hands; and, in the case of smart phones, can but does not necessarily mean devices that are roughly the size of an average human palm.

One or more processors 8180, 8158, 8138, 8132(a), etc., working singly or in any desirable or otherwise suitable combinations, can use inputs generated and/or otherwise provided by any one or more of the various input device(s) input device(s) 8140, 8141 / 740, 8112, 8137, 8138, 8160, 8134/726, 8240, 8242, 8246, 8106, 8108, 8132, 8101 and locally and/or remotely-accessible peripheral devices, such as printers, servers, telephones, computers, etc., to generate, according to suitably-configured logic rules, output signals suitable for processing by any one or more of the various output device(s) 8160, 8110, 8135 / 724, 8106, 8108, 8132, 8101, and locally and/or remotely-accessible peripheral devices, etc.

Any or all of processor(s) 8180, 8158, 8138, 8132(a), etc., along with any other desired components and/or (sub)systems incorporated, by a device 120 may be protectively and/or functionally contained within housing 8120(s) coupled, as for example by means of suitably-configured buses, etc., between the various memory, input, output, and auxiliary devices (such as battery(ies), solar power generators, etc) in order to perform the functions disclosed herein. Processor(s) 8180, 8158, 8138, 8132(a) may be of any suitable form(s). For example, CPU(s) 8180 may comprise one or more microprocessors chip contained on or otherwise attached to one or more circuit boards within housing(s) 8120. CPU(s) 8180 can provide general command and control functions including, for example, operation of the display 8160, as well as the overall operation of the mobile device 110, 120, in response to received information and inputs, such as in response to actuation of keys on the keypad 8140 by the user. Processors, 8158, 8138, 8132(a), etc., may be provided to control specialized functions such as operation of NFC and other particular communications channels.

Logic rules suitable for use by processors 8180, 8158, 8138, 8132(a) in generating such outputs can be accessed from any suitable locally and/or remotely located source(s), including, for example, any one or more applications modules 8130A - N, 8244, 8248, etc., as, for example, explained herein. Such rules and modules can be provided in any form(s) suitable for achieving the purposes addressed herein, including for example software instructions stored in transient (volatile) and/or non-transient (persistent) memory, firmware, and hard-programmed hardware device(s) or component(s).

Memory(ies) 8118, 8116, etc., which can be of any form compatible with the purposes disclosed herein, including, for example, flash, EEPROM, RAM, ROM, disk, register, etc., can be accessed, controlled, and otherwise used 8180, 8158, 8138, 8132(a), etc., for reading data used in the various processes described herein, for storing output so generated, and for holding executable forms of suitably-configured application and/or module instruction sets. Such stored data may, for example include operating system and other software executed by the processing device 8180.

As shown in Figure 3, an active NFC device 110 can comprise multiple communications abilities, and thus may have the ability to conduct concurrent communications sessions with other devices 110, 950, 912, 914, etc., using NFC voice, and/or other communication means. For example, as illustrated, NFC capable device 110 may be engaged in peer-to-peer communication with a second NFC capable device 110, while also communicating with a baseband access point 912, 914, which may take the form of a cellular base station, for example.

Long-range (e.g., cellular) voice and/or text communications processes may be provided for an active device 110,120 by one or more wireless communications subsystems 8101, comprising transmitter(s) 8152, 8156, receiver(s) 8150, 8154, and digital signal processor(s) (DSP(s)) 8158.

Short-range communications may be provided by either or both of NFC subsystem(s) 8102, 8132, which may or may comprise dedicated antenna systems for short-range aspects; specialized memory device(s) 8116, 8118, and other device subsystems 8121.

Mobile device(s) 110, 120 in accordance with the disclosure may therefore be considered, in the examples shown, example, two-way RF communications devices having voice and data communications capabilities using RF circuitry. In addition, the mobile device 110, 120 may have the capability to communicate with other computer systems 110, 912, 914, etc., via the Internet or other network(s) 900. For example, a device 110, 120 may communicate with one or more servers 912, such as Internet servers, via RF subsystems 8101 and the associated components, including web module 8130e, and further via short-range communications subsystem(s) 8102, such as via web/browser module(s) 8130e. System(s) 8102 may include, for example, one or more Bluetooth communications modules for establishing Bluetooth wireless connection(s), and other communications modules, such as infrared modules or devices, Wi-Fi circuits and modules, and associated components and circuits that may also form part of the RF circuitry.

In some embodiments, devices 912, 914, 110, 120, 950 with which the mobile device 110, 120 communicates via the NFC subsystem 8132, wireless communications (sub)system 8101), short-range communications subsystem(s) 8102 or otherwise can include devices which are part of a vendor POS system or terminal and/or payment processing systems.

A predetermined set of applications that control basic and optional device operations, such as data and voice communications 8130A and 81306, may be installed on the device 110,120 during manufacture. Application modules 813OA-N may include native and non-native modules for security 8130D, Web interaction 8130E, social interactions or applications, and the like.

NFC communications module(s) 8130C may include hardware and/or software to enable NFC controller(s) 8132A (which may themselves include hardware, software, and firmware a required) and with the microprocessor 8180, to perform NFC communications tasks, such as through the memory 8116, NFC communications module(s) 8130C may, in various embodiments, support responsive operability for tag 950 reads/writes, whether virtual or physical, by interacting with other modules and apps to affect data stored on tag(s) 950, and/or to obtain or write tag data. Such other modules may for example include web module 8130E, PIM module 8130F, and other software modules 8130N (such as apps and video players, by way of non-limiting examples). Microprocessor(s) 8180 may also cooperate with NFC module(s) 8130C, and with NFC subsystem(s) 8132, which may include one or more NFC chips comprising NFC controller(s) 8132a, and antenna(s) 8132b to facilitate communications with other active and/or inactive NFC device(s) 110, 950, as discussed herein. For example, an NFC communications module 8130C may allow a microprocessor 8180 to control the NFC subsystem 8132 and/or memory stores 8116, 8118.

NFC chips suitable for use in implementing aspects of the disclosure may, for example, comprise one or more PN531 microcontroller-based transmission modules produced by Koninklijke Phillips Electronics N.V. Such NFC chips 8132a may, for example, include both digital and analog circuitry, and one or more contactless Universal Asynchronous Receiver Transmitters (UARTs), cores, and host interfaces. Incorporated circuitry may include output drivers, integrated demodulators, bit decoders, mode detectors and RF-, magnetic, and/or level detectors as suitable. Suitable contactless UARTs may include elements for data processing, Cyclical Redundancy Checking (CRC), parity generation, framing generation and check bit coding and decoding, and/or other functions. Cores may, for example, include one or more 80C51 microcontroller, 32 Kbytes or other amounts of ROM and, one Kbyte or other amounts of RAM, for example. A set of host interfaces may interface with the microprocessor and interface according to such known standards as 12C, serial UART, SPI and USB. NFC circuits may be tuned to any frequency(ies) suitable for accomplishing the purposes disclosed herein, as for example about 13.56 MHz.

NFC (sub)system(s) 8132 may include and/or otherwise cooperate with one or more magnets/magnetometers or other magnet sensors 8134, such as Hall Effect sensors, communicatively connected to the microprocessor 8180, 8132a. Sensor(s) 8134 may include components suitable for operation as a Hall Effect sensor, including any necessary coils or other circuits. There is also illustrated a magnet/magnetometer 8135 that, in various embodiments, may be advantageously be provided in the form of one or more electromagnets and may operates with microprocessor(s) 8180, 8132am etc., to allow one or more alternate communications pathways using electromagnetic energy, which may be changed to correspond to changing data. Electromagnet(s) 8135 may perform a variety of different functions, including working as an active or passive device in association with other components of the device 110. For example, when an electromagnet 8135 is used instead of a permanent magnet (non-electromagnetic) in the devices of Figure 3, a pulse of energy may be delivered to the Hall Effect sensor in another device. The other device receiving the pulse may accordingly activate its NFC circuit. A Wi-Fi connection, for example, in the alternative may be established if an NFC and/or Bluetooth connection is not established. Other modules 8130N may include, for example, software that interoperates with the magnetic sensor 8134 and any magnet or electromagnet 8135 or other magnetic circuitry that may be included within the overall electromagnet 8135.

In addition, personal information manager (PIM) application module(s) 8130F may be or include one or more native modules installed during manufacture. PIM(s) 8130F may be capable of organizing and managing data items, such as email, contacts, calendar events, voice mails, appointments, and task items. The PIM application is also capable of sending and receiving data items via a wireless network. The PIM data items are seamlessly integrated, synchronized and updated via the wireless network with the device user's corresponding data items, such as may be stored in the cloud or as may be associated with a host computer system, for example.

Communication functions, including data and voice communications, may be performed through the communications subsystem 8101, and/or through the short-30 range communications subsystem 8102, which may be part of the circuitry contained in device 810. The specific design and implementation of the communications subsystems 8101 and 8102 may be dependent upon the communications network in which the mobile device 810 is intended to operate.

Such communication functions may, as referenced above, be carried out by data module 8130B, voice module 8130A, and web module 8130D, including at the instruction of NFC module 8130C in accordance with the disclosed embodiments, with security for these communications, such as in the granting of access to PIM module 8130F, overseen by a security module 8130D. A security module 8130D may include one or more native or non-native security applications, including anti-virus/anti-malware applications or functions, and protection of PIM information via applications or functions, during external interactions, may occur via NFC or via the Web, for example. Accordingly, security module 8130D may allow for degrees of security in interacting with other devices, such as the aforementioned tags, and/or other devices such as servers (herein defined to include any device acting as an Internet, intranet, extranet, or other public or private network node, host, server, or the like), and particularly with devices or aspects of a device that enable the occurrence of communication exchanges by the device occur over a network, such as the Internet.

As previously noted, NFC processes may be conducted according to any of a wide variety of wireless, short-range communications protocols. Such protocols typically comprise sets of standards to enable devices 110, 120, such as smartphones and the like, to establish radio communication with each other by bringing them into close proximity, or by touching them together. Applications include wireless data transactions and simplified setup of communication sessions involving other communication technologies, such as Wi-Fi and Bluetooth. Communication is also possible between a powered NFC device and a powered or unpowered NFC "tag" or button. Suitable standard currently in use are have been p promulgated by the NFC Forum, which was founded in 2004 by Nokia, Philips and Sony, and which now has more than 160 members. The NFC Forum also promotes NFC and certifies device compliance.

Standards have been developed that cover both NFC Forum - sanctioned communication protocols and other short-range wireless data exchange (NFC) formats. Specifically, an example of NFC standards ISO/IEC 18092 / ECMA-340; Near Field Communication Interface and Protocol-1 (NFCIP-1); ISO/IEC 21481 / ECMA-352; and Near Field Communication Interface and Protocol-2 (NFCIP-2). NFC also encompasses a variety of pre-existing standards including ISO/IEC 14443 both Type A and Type B, and FeliCa. The standards specify the NFC air interface, modulation schemes, coding, transfer speeds, and frame format of the RF interface of NFC devices. The standards also comprise initialization schemes and conditions required for data collision-control during initialization for both active and passive NFC modes. In addition, they define a transport protocol, including protocol activation and data-exchange methods.

NFC protocols sanctioned by the NFC forum typically operate within a globally available and unregulated radio frequency band of 13.56 MHz, and generally have a working distance of up to about 20 centimeters. Three data rates are currently defined in the NFC standards: 106 kilobits per second (kbit/s); 212 kbit/s; and 424 kbit/s.

In addition, the NFC Forum has defined a common data format called NFC Data Exchange Format (NDEF), which can store and transport various kinds of items, such as MIME-typed objects and URLs. The NFC Forum also added the Simple NDEF Exchange Protocol for sending and receiving messages between two NFC-enabled devices.

All of the above-mentioned standards and formats, along with any other existing and applicable NFC standards, are incorporated herein by reference as if fully set forth in their entirety, in their finalized condition.

Both passive and active communications modes have been defined. In active communication modes, both an initiator device and a Target device may generate their own NFC fields 1000 (see e.g., Figures 1 and 2). The initiator device may start the NFC communication, with the target device responding to commands received from the initiator device, as appropriate, by modulating the NFC field 1000 generated by the Target device.

Between two active NFC devices 110, either or both devices can act as either initiator or target. In passive communication mode, one of the devices lacks, or does not employ an ability to independently create an electro-magnetic NFC carrier field 1000, and therefore generally does not serve as an initiator.

As previously noted, among the many uses to which NFC systems and devices, and related methods, can be put is the control of handheld and other mobile communication and computer systems, including for example device(s) 110, 120, 950, etc.

As noted above, device(s) 110, 120 can have applications or software modules 8130A-N stored in one or more memories 8118, 8116, or otherwise resident for execution by at least one processor 8180, 8158, 8138, 8132(a). One such application can be a mobile payment application for managing, enabling, or for otherwise facilitating a transaction or payment using the mobile device 110, 120.

The mobile payment application can configure the mobile device 110, 120 to negotiate or complete transactions, or to otherwise exchange information with one or more networked payment processing resources such as a point-of-sale terminal, server, database, device or other resource for payment processing. These resources can be operated, for example, by merchants, service providers, financial institutions, payment processors, loyalty reward operators, technology companies, individual consumers and the like.

In some examples, a mobile device 110, 120 can be associated with or otherwise being operated by an authorized user. The mobile device 110, 120 can include one or more secure memories (e.g. Secure Element(s)) storing transaction restriction(s) for the authorized user, and payment or transaction information associated with an administrative user.

Based on a proposed transaction and the transaction restriction(s), the administrative user's payment or authorization information can be transmitted by the device associated with the authorized user to commence, complete or otherwise facilitate the transaction.

For example, a mobile device associated with an authorized user, such as a child, can be configured to store transaction or payment information associated with an administrative user such as a parent. When the mobile device associated with the child attempts to initiate a transaction, the signals representing terms of the proposed transaction can be compared against one or more transaction restrictions set by the parent. If the mobile device associated with the child determines that the proposed transaction is authorized, the device can transmit transaction and/or payment information stored in a device memory to a payment processing resource.

In this manner, the mobile device can, in some examples, allow an authorized user to complete transactions using an administrator's payment information without the presence or express authorization of the administrator but can limit authorized transactions based on transaction restrictions set by the administrator. Example relationships between administrator and the authorized user can include a parent-child relationship, an employer-employee relationship, a supervisor-delegate relationship, a principal-agent relationship or any other relationship wherein an administrator may selectively authorize a transaction by an authorized user.

In some examples, the authorization and transaction restrictions can be privately managed between devices associated with the administrative and authorized users, and may be completely independent and unknown to a transaction or payment processing system.

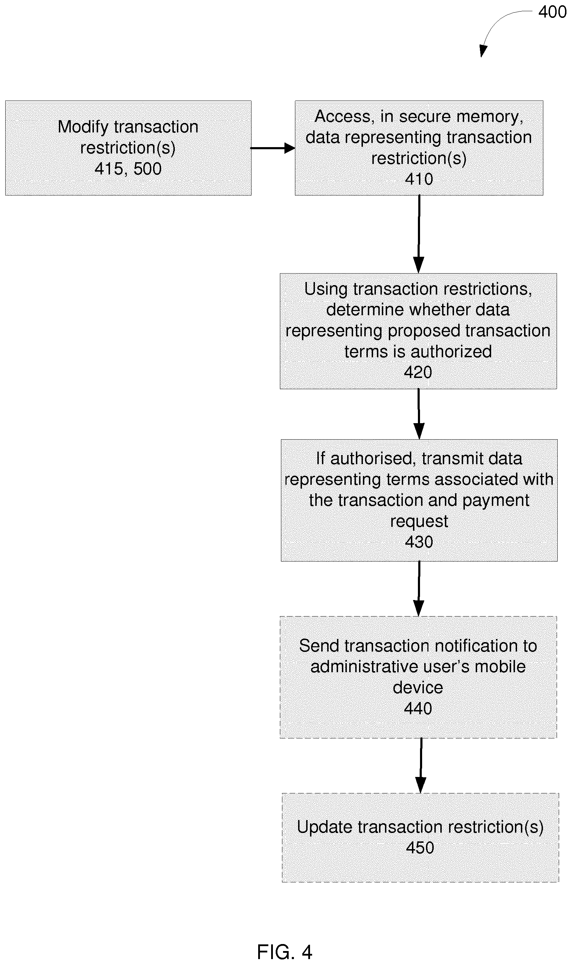

An example method which can be performed by at least one processor on an NFC-capable device is shown in Fig. 4. The method can be performed, for example, when the at least one processor is executing a mobile payment or other application stored in a memory or otherwise resident on the device.

At 410, the processor(s) access data representing one or more transaction restrictions in secure memory(ies) (e.g. Secure Element(s)) of the device. The secure memory can be a dedicated memory module or can be a secure portion or partition of a memory device such as on-board memory 8116, 8118, a SIM/RUIM/UICC (Subscriber Identity Module / Removable User Identity Module/Universal Integrated Circuit Card) card, a removable memory device, an NFC Secure Element, or any other suitable memory device.

In some examples, the secure memory can be encrypted, encoded, signed, segregated, or otherwise secured in the secure memory. The secure memory can, in some examples, be secured using a standards or specifications such as the GlobalPlatform Secure Element specifications. The device 110, 120 may include specific controller(s), application(s) and/or memory(ies) configured for securing the memory and for following the standards or specifications.

In some examples, controller(s), processor(s), application(s) and/or memory device(s) comprising a secure memory system may be configured to comply with guidelines or standards organizations such as the Federal Information Processing Standards Publication (FIPS) 190.

As described herein, transaction restrictions can include restrictions or rules defining the types of transaction terms authorized by the administrative user. These restrictions can involve, for example, minimum or maximum transaction amounts, allowances or aggregate amounts, vendors or vendor classes, time restrictions, geographic restrictions, specific or classes of items or services, and the like. Restrictions may, in some examples, involve combinations of these factors.

At 420, using the transaction restriction(s), the processor(s) can determine whether a transaction data set representing terms of a proposed transaction is authorized. The transaction data set can, for example, be received by the device 110, 120 via wireless communications 8101, short range communications 8102, NFC 8132, or an input device 8246, 8108, 8140, 8141, 8112, 8242, 8240, 8106, 8134, 8135, 8160 etc. The transaction data set may include data such as transaction amounts, vendor or vendor class identifiers, item/service or item/service class identifiers, location, etc. and may be transmitted to the device 110, 120 from a POS terminal or payment processing resource. For example, a device 110, 120 associated with an authorized user can be presented at a POS terminal which can be configured to transmit or to cause another resource to transmit terms of the proposed transaction to the device 110, 120. In another example, terms in the transaction data set can be determined when the authorized user attempts to make an online purchase through a web browser or other application. In another example, terms of a proposed transaction can be received from a user via an input device such as a keypad 8140, touchscreen 8160 or other device.

The processor(s) can be configured to determine whether the proposed transaction is authorized, for example, by comparing the data representing terms of the transaction with factors in one or more transaction restrictions. In some examples, this determination can include comparing numerical values, identifiers, thresholds, aggregate amounts, etc. The processor(s) can be configured to determine that the transaction is authorized when all or some of the transaction restrictions are met.

If not authorized, the processor(s) may be configured to display or transmit a message indicating that the transaction is not authorized to the device and/or to administrative users.

At 430, when the processor(s) determine that a proposed transaction is authorized, the processor(s) can be configured to transmit data representing terms associated with the transaction data set and a payment request to a payment processing resource. For example, the device 110, 120 associated with the authorized user can transmit a transaction amount, payee and/or payor information to a payment processing system or financial institution as part of the terms or the payment request.

In some example, the data transmitted by the device can include credit card or financial account information associated with funds to be used as payment for the proposed transaction. The credit card or financial account information can be associated with or otherwise provided by the administrative user. In some examples, administrative user transaction or payment data can be access from a secure memory on the device associated with the authorized user. This data may be stored or modified in the same or similar manner as the transaction restrictions as described herein.

In some examples, the processor(s) may be configured to transmit the data representing the terms and/or payment request via NFC or any suitable communication system 8101, 8102, 8132 or network. In other examples, the processor(s) may be configured to transmit some or all of the data to a POS terminal or other intermediate device which can send the data to a networked payment processing resource.

At 440, the processor(s) on the device 110, 120 associated with the authorized user may be optionally configured to send a transaction notification to a device associated with the administrative user. This notification can be sent after a payment request has been sent at 430, or after the device 110, 120 receives signals indicating the payment request has been approved.

In some examples, the notification can include authorized user information, vendor information, item or service information, price information, location information, or any other information related to the transaction. The notification can be sent as an email, an SMS/MMS, instant message, or using any other suitable messaging system. In some examples, this notification can provide real or near real-time updates to an administrator.

At 450, the processor(s) on the device 110, 120 associated with the authorized user may, if necessary, be configured to update one or more transaction restrictions based on the completed transaction. For example, if a transaction restriction includes an aggregate amount, the transaction restriction may be updated to reduce the aggregate amount by the amount of the completed transaction. Conversely, in another example, instead of decrementing the aggregate amount, transaction restriction may include a total spent amount which can be incremented by a completed transaction amount.

At 415, 500, the processor(s) can be configured to modify the transaction restriction(s) and/or administrator payment or transaction information stored in secure memory on the device 110, 120. Modifying the restrictions can include creating, changing, deleting, replicating, revising, reordering or otherwise managing the restrictions stored on the device. These modifications can be received by the mobile device 110, 120 via a network, for example, as a wireless signal transmission including data or instructions for modifying transaction restriction(s).

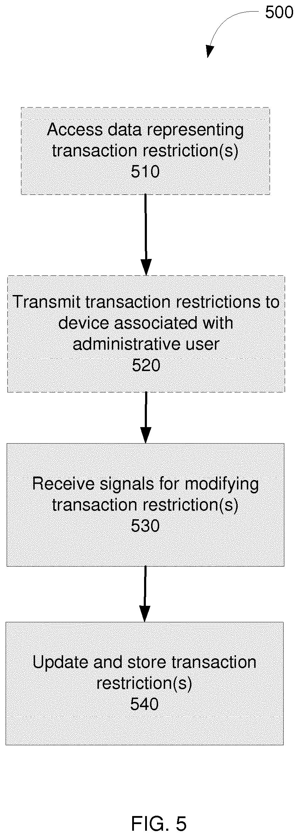

Fig. 5 shows an example method 500 for modifying administrative user data on the mobile device 110, 120 associated with the authorized user. Modifying the administrative user data can include creating, changing, deleting, replicating, revising, reordering or otherwise managing the administrative user data stored on the device.

The administrative user data can represent transaction restriction(s) and/or payment information such as credit card information, financial account information, billing information, or any other data for completing or facilitating a transaction.

At 530, the processor(s) can be configured to receive signals for modifying the administrative user data. These signals can, in some examples, be received from a device associated with the administrative user. For example, as illustrated in Fig. 1, a device 110, 120 associated with the authorized user can be configured to receive modifying signals from a device 110, 120 associated with the administrative user via NFC. In other examples, the authorized user device can be configured to receive modifying signals via Wi-Fi, cellular communications, Bluetooth™, RFID, wired communications, or any other suitable connection.

In some examples, the authorized user device can be configured to receive modifying signals comprising or embedded in an email, an SMS/MMS message, or any other suitable messaging format. The modifying signals may, in some examples, be encrypted, encoded or otherwise secured. In some examples, the processor(s) can be configured to automatically recognize modifying signals comprising or embedded in message irrespective of the format in which they are received.

In the aforementioned or other manners, the modifying signals can, in some examples, be sent directly between the devices associated with the authorized and administrative users without any involvement or specific handler by a server or other central or intermediate device.

In some examples, received modifying signals may not be accessible, readable, or even made known to the authorized user.

The signals received at 530 can, in some examples, adjust payment privileges of the authorized user by modifying transaction restrictions. For example, received signals can immediately cut off payment privileges of an authorized user by including instructions or data for modifying maximum transaction amounts to zero.

In some examples, the authorized user device can be configured to receive modifying signals from an input device. For example, upon providing proper credentials, an administrative user can directly enter administrative user data onto the authorized user device using an input device such as a keypad or touchscreen.

At 540, the processor(s) can be configured to update and store the administrative user data in a secure memory on the authorized user device. The data can be encrypted, encoded, segregated, or otherwise secured in the secure memory. In some examples, the data cannot be viewed, edited or otherwise accessed by the authorized user. In an example scenario, this may allow a parent to provide credit card information for restricted use by a child without the child having access to the actual credit card information potentially limiting abuse. The credit card information may, upon authorization, be provided directly to the vendor or payment processing system without being visible or accessible by the child.

As described above, the administrative user data can include transaction restriction data defined by the administrative user to restrict use of payment information by the authorized user.

In some examples, the transaction restriction(s) can include one or more purchase amount restrictions such as a minimum or maximum value for a single transaction. Purchase amount restrictions may also include an aggregate amount such as a child's allowance or spending limit over any number of transactions. This aggregate amount can, in some examples, be decremented or otherwise modified in the transaction restrictions after each transaction.

In some examples, the transaction restriction(s) can be time limited. For example, a restriction may only allow transactions during certain times of the day, days of the week, months of the year, within the next 5 hours, or any other time ranges.

Transaction restriction(s) can also be time limited aggregates such as an aggregate spending limit of $30 per month. In some examples, this aggregate can automatically reset to $30 each month, or can accumulate by increasing the aggregate limit by $30 every month (akin to saving an allowance for a large purchase).

Transaction restriction(s) may also include restrictions on the vendor or the class of vendor for which a transaction is proposed. For example, a transaction restriction can deny authorization for any proposed transactions at a specific restaurant, or for any proposed transactions at any liquor store.

Similarly, transaction restriction(s) may include restrictions on the proposed purchase of specific items or services, or classes of items or services. In one example, this may restrict the authorization of a purchase of alcohol at any type of vendor including stores or restaurants.

Vendors, items, services or classes of these factors can, in some examples, be identified by numerical, enumerated, or otherwise identifiable identifiers.

Transaction restriction(s) may include geographic location identifiers and/or distances. Geographic indicators can, for example, include addresses, postal codes, neighborhoods, cities, and the like. In some examples, restrictions may limit transactions which occur inside or outside a particular geographic area or within a specified distance of a geographic location. The location of a proposed transaction may, for example, be received by a device from another device involved in a transaction, such as a POS terminal, or may be determined by the device through other means such as through a GPS system.

Transaction restriction(s) can also include combinations of factors. For example, a restriction may include both a maximum purchase amount and a class of vendor. For example, a restriction may include a maximum purchase amount that can be made at any liquor store.

While the examples herein describe transaction restriction(s) as limitations to potential transactions, it should be understood that transaction restriction(s) can also include approvals or whitelists. For example, a transaction restriction may specify that any proposed transaction at a campus bookstore be authorized.

In some examples, transaction restrictions can be independent of any restrictions set by a financial institution or payment processing system such as credit card limits, bank withdrawal limits, or other restrictions. The transaction restrictions stored on the authorized user device can be managed independently from, and unbeknownst to any underlying financial institution or payment processing system.

In some examples, the processor(s) can be configured to receive and store administrative user data from multiple administrative users. For example, a mobile device 110, 120 associated with a child may receive and store payment information such a credit card number from each of a father and a mother administrative user. The mobile device may receive and store transaction restrictions from each of the father and the mother administrative users. In some examples, these restrictions can be specific to the respective administrative user and payment information. In some examples, the processor(s) may be configured to require that restrictions set by multiple or all administrative users be met before determining that a proposed transaction is authorized.

In some examples, the processor(s) can be configured to access 510 and transmit 520 administrative user data before signals for modifying the administrative user data are received. For example, a device associated with an administrative user may send a request to the device associated with the authorized user to request some or all of the administrative user data stored on the device associated with the authorized user. Upon receipt, the device associated with the administrative user can display current payment information and/or transaction restriction(s) for review or modification.

With reference to Fig. 4, in some examples, the processor(s) can be configured to determine 420 whether a transaction data set is authorized by sending authorization request signal(s) to device(s) associated with one or more administrative users, and upon receiving approval signal(s) from one or more of the device(s) associated with the administrative users, determine that the proposed transaction terms are authorized.

In some examples, the processor(s) can be configured to send authorization request(s) when one or more transaction restrictions are not satisfied, when an input signal is received indicating that the transaction is an emergency, or as otherwise configured by the administrative user or payment application.

In some examples, transaction restriction(s) may include device conditions such as whether a wireless connection is available. For example, a transaction restriction may include a maximum purchase amount associated with a non-wireless condition. This can, in some examples, restrict the authorization of purchases when an authorization request signal or transaction notification cannot be immediately sent to a device associated with an administrative user. In some examples, the maximum purchase amount can be zero.

In some examples, the administrative user data, such as the payment information or the transaction restriction(s), may include a personal identification number (PIN), password, or other authentication token. This authentication token can be associated with the authorized user and may be modified (e.g. created, changed, deleted, etc.) by the administrative user similar to the other administrative user data. At 420, the processor(s) may be configured to determine that the proposed transaction is authorized when the processor(s) receive signals representing an authentication token inputted on or presented to the device.

In some examples, the authentication token can be independent of an authentication token, such as a credit card PIN, stored with the payment information. In some examples, the administrative user can assign a different authentication token to different authorized users on different or the same device.

In further aspects, the disclosure provides systems, devices, methods, and computer programming products, including non-transient machine-readable instruction sets, for use in implementing such methods and enabling control of mobile and other communication and computing devices.

Although the disclosure has been described and illustrated in exemplary forms with a certain degree of particularity, it is noted that the description and illustrations have been made by way of example only. Numerous changes in the details of construction and combination and arrangement of parts and steps may be made. Accordingly, such changes are intended to be included in the invention, the scope of which is defined by the claims.

Except to the extent explicitly stated or inherent within the processes described, including any optional steps or components thereof, no required order, sequence, or combination is intended or implied. As will be will be understood by those skilled in the relevant arts, with respect to both processes and any systems, devices, etc., described herein, a wide range of variations is possible, and even advantageous, in various circumstances, without departing from the scope of the invention, which is to be limited only by the claims.

## Claims

1. A method, performed by at least one processor (8180, 8158, 8138, 8132(a)) of a near-field communication, "NFC", capable mobile communication device (110, 120) executing a mobile payment application resident on the NFC-capable mobile communication device (110, 120), comprising:
accessing (410), via a controller in secure memory of the mobile communication device (110, 120), data representing at least one transaction restriction associated with an authorized user of the mobile communication device (110, 120), wherein the at least one transaction restriction was created or modified by receiving modifying signals comprising or embedded in a message from another device associated with at least one administrative user of the NFC-capable mobile communication device (110, 120), via at least one of NFC, Wi-Fi, cellular communications, Bluetooth™, RFID, or wired communications before the accessing the data representing the at least one transaction restriction, and wherein the transaction restriction in the secure memory is not accessible to the authorized user, the at least one transaction restriction including a non-wireless condition to restrict a transaction to a maximum purchase amount when a wireless connection for the mobile communication device (110, 120) is not available so that an authorization request signal or transaction notification cannot be immediately sent to the another device associated with the at least one administrative user;
using the at least one accessed transaction restriction, determining (420) whether a transaction data set representing terms of a proposed transaction is authorized, wherein a transaction is authorized when all or some of the transaction restrictions including the non-wireless condition are met; and
if the transaction is authorized, transmitting (430) to a networked payment processing resource data representing terms associated with the transaction data set and a payment request.

2. The method of claim 1, wherein the at least one transaction restriction in the secure memory of the mobile of the mobile communication device (110, 120) is modifiable by means of wireless signal transmission.

3. The method of claim 2, wherein the wireless signal transmission comprises at least one SMS message.

4. The method of claim 2 or 3, wherein the wireless signal transmission comprises at least one e-mail message.

5. The method of any one of claims 1-4, comprising, if the payment request is approved by the networked payment processing resource, sending to the at least one administrative user of the NFC-capable mobile communication device (110, 120) a transaction notification.

6. The method of any one of claims 1-5, wherein determining (420) whether a transaction data set representing terms of a proposed transaction is authorized comprises sending to the at least one administrative user an authorization request signal, and receiving an approval signal from the at least one administrative user.

7. The method of any one of claims 1-6, wherein the at least one transaction restriction comprises at least one maximum purchase amount.

8. The method of any one of claims 1-7, wherein the at least one transaction restriction comprises at least one vendor identifier.

9. The method of any one of claims 1-8, wherein the at least one transaction restriction comprises at least one maximum purchase amount associated with at least one vendor identifier.

10. The method of any one of claims 1-9, wherein the at least one transaction restriction comprises at least one geographic location identifier.

11. The method of any one of claims 1-10, wherein the networked payment processing resource comprises an account administration system associated with an account associated with funds to be used as payment for the proposed transaction.

12. The method of any one of claims 1-11 wherein the payment request comprises data representing credit card account information.

13. The method of any one of claims 1-12, wherein the at least one transaction restriction comprises at least one purchased item identifier.

14. The method of any one of claims 1-13, wherein the at least one transaction restriction comprises at least one purchase amount associated with a time.

15. The method of any one of claims 1-14, wherein the at least one transaction restriction comprises at least one authentication token associated with the authorized user.

16. A near-field communication, "NFC",-enabled device (110, 120) comprising:
a secure memory; and
at least one processor (8180, 8158, 8138, 8132(a)) configured for performing the method of any one of claims 1-15.

17. A non-transitory medium or media having stored thereon machine-readable instructions configured to cause a processor (8180, 8158, 8138, 8132(a)) to perform the method of any one of claims 1-15.

## Patentansprüche

1. Verfahren, ausgeführt durch zumindest einen Prozessor (8180, 8158, 8138, 8132 (a)) einer nahfeldkommunikationsfähigen, "NFC-", Mobilkommunikationsvorrichtung (110, 120), die eine Mobilzahlungsanwendung ausführt, welche auf der NFC-fähigen Mobilkommunikationsvorrichtung (110, 120) vorgesehen ist, umfassend:
Zugreifen (410), über eine Steuerung im sicheren Speicher der Mobilkommunikationsvorrichtung (110, 120), auf Daten, die zumindest eine Transaktionsbeschränkung darstellen, welche mit einem autorisierten Benutzer der Mobilkommunikationsvorrichtung (110, 120) assoziiert ist, wobei die zumindest eine Transaktionsbeschränkung durch Empfangen von Modifizierungssignalen erzeugt oder modifiziert wurde, die eine Nachricht von einer anderen Vorrichtung umfassen oder darin eingebettet sind, welche mit zumindest einem administrativen Benutzer der NFC-fähigen Mobilkommunikationsvorrichtung (110, 120) assoziiert ist, über zumindest eines von NFC, Wi-Fi, zellulare Kommunikation, Bluetooth™, RFID oder verdrahtete Kommunikation vor dem Zugreifen auf die Daten, die die zumindest eine Transaktionsbeschränkung darstellen, und wobei die Transaktionsbeschränkung im sicheren Speicher für den autorisierten Benutzer nicht zugänglich ist, wobei die zumindest eine Transaktionsbeschränkung eine Nichtdrahtlos-Bedingung zum Beschränken einer Transaktion auf eine maximale Erwerbsmenge beinhaltet, wenn eine drahtlose Verbindung für die Mobilkommunikationsvorrichtung (110, 120) nicht verfügbar ist, sodass ein Autorisierungsanforderungssignal oder eine Transaktionsmeldung nicht sofort an die andere Vorrichtung, die mit dem zumindest einen administrativen Benutzer assoziiert ist, gesendet werden kann;
unter Benutzung der zumindest einen Transaktionsbeschränkung, auf die zugegriffen wurde, Bestimmen (420), ob ein Transaktionsdatensatz, der Bedingungen einer vorgeschlagenen Transaktion darstellt, autorisiert ist, wobei eine Transaktion autorisiert ist, wenn alle oder einige der Transaktionsbeschränkungen einschließlich der Nichtdrahtlos-Bedingung erfüllt sind; und,
wenn die Transaktion autorisiert ist, Übertragen (430), an eine vernetzte Zahlungsverarbeitungsquelle, von Daten, die Bedingungen darstellen, welche mit dem Transaktionsdatensatz und einer Zahlungsanforderung assoziiert sind.

2. Verfahren nach Anspruch 1, wobei die zumindest eine Transaktionsbeschränkung im sicheren Speicher der Mobilkommunikationsvorrichtung (110, 120) mittels einer drahtlosen Signalübertragung modifizierbar ist.

3. Verfahren nach Anspruch 2, wobei die drahtlose Signalübertragung zumindest eine SMS-Nachricht umfasst.

4. Verfahren nach Anspruch 2 oder 3, wobei die drahtlose Signalübertragung zumindest eine E-Mail-Nachricht umfasst.

5. Verfahren nach einem der Ansprüche 1 bis 4, umfassend, wenn die Zahlungsanforderung durch die vernetzte Zahlungsverarbeitungsquelle genehmigt wird, Senden einer Transaktionsmeldung an den zumindest einen administrativen Benutzer der NFC-fähigen Mobilkommunikationsvorrichtung (110, 120).

6. Verfahren nach einem der Ansprüche 1 bis 5, wobei das Bestimmen (420), ob ein Transaktionsdatensatz, der Bedingungen einer vorgeschlagenen Transaktion darstellt, autorisiert wird, Senden, an den zumindest einen administrativen Benutzer, eines Autorisierungsanforderungssignals und Empfangen eines Genehmigungssignals von dem zumindest einen administrativen Benutzer umfasst.

7. Verfahren nach einem der Ansprüche 1 bis 6, wobei die zumindest eine Transaktionsbeschränkung zumindest eine maximale Erwerbsmenge umfasst.

8. Verfahren nach einem der Ansprüche 1 bis 7, wobei die zumindest eine Transaktionsbeschränkung zumindest eine Verkäuferkennung umfasst.

9. Verfahren nach einem der Ansprüche 1 bis 8, wobei die zumindest eine Transaktionsbeschränkung zumindest eine maximale Erwerbsmenge umfasst, die mit zumindest einer Verkäuferkennung assoziiert ist.

10. Verfahren nach einem der Ansprüche 1 bis 9, wobei die zumindest eine Transaktionsbeschränkung zumindest eine geografische Ortskennung umfasst.

11. Verfahren nach einem der Ansprüche 1 bis 10, wobei die vernetzte Zahlungsverarbeitungsquelle ein Kontoverwaltungssystem umfasst, das mit einem Konto assoziiert ist, welches mit Geldmitteln assoziiert ist, die als Zahlung für die vorgeschlagene Transaktion benutzt werden sollen.

12. Verfahren nach einem der Ansprüche 1 bis 11, wobei die Zahlungsanforderung Daten umfasst, die Kreditkartenkontoinformation darstellen.

13. Verfahren nach einem der Ansprüche 1 bis 12, wobei die zumindest eine Transaktionsbeschränkung zumindest eine Kennung eines erworbenen Artikels umfasst.

14. Verfahren nach einem der Ansprüche 1 bis 13, wobei die zumindest eine Transaktionsbeschränkung zumindest eine Erwerbsmenge umfasst, die mit einer Zeit assoziiert ist.

15. Verfahren nach einem der Ansprüche 1 bis 14, wobei die zumindest eine Transaktionsbeschränkung zumindest ein Authentifizierungstoken umfasst, das mit dem autorisierten Benutzer assoziiert ist.

16. Nahfeldkommunikationsfähige, "NFC-", Mobilkommunikationsvorrichtung (110, 120), umfassend:
einen sicheren Speicher; und
zumindest einen Prozessor (8180, 8158, 8138, 8132 (a)), der zum Ausführen des Verfahrens nach einem der Ansprüche 1 bis 15 konfiguriert ist.

17. Nichtflüchtiges Medium oder Medien mit darauf gespeicherten maschinenlesbaren Anweisungen, die zum Bewirken konfiguriert sind, dass ein Prozessor (8180, 8158, 8138, 8132(a)) das Verfahren nach einem der Ansprüche 1 bis 15 ausführt.

## Revendications

1. Procédé, mis en œuvre par au moins un processeur (8180, 8158, 8138, 8132 (a)) d'un dispositif de communication mobile (110,120) capable d'une communication de champ propre, NFC, exécutant une application de paiement mobile résidente sur le dispositif de communication mobile capable de NFC (110,120), comprenant de :
accéder (410), via un contrôleur dans une mémoire sécurisée du dispositif de communication mobile (110,120), à des données représentant au moins une restriction de transaction associée à un utilisateur autorisé du dispositif de communication mobile (110,120), dans lequel au moins une restriction de transaction a été créée ou modifiée en recevant des signaux de modification comprenant ou incorporés dans un message provenant d'un autre dispositif associé à au moins un utilisateur administratif du dispositif de communication mobile capable de NFC (110,120) via au moins une d'une communication NFC, Wifi, cellulaire, Bluetooth™, RFID ou câblée avant d'accéder aux données représentant au moins une restriction de transaction et dans lequel la restriction de transaction dans la mémoire sécurisée n'est pas accessible à l'utilisateur autorisé, au moins une restriction de transaction incluant une condition non sans fil pour restreindre une transaction à un montant d'achat maximal lorsqu'une connexion sans fil pour le dispositif de communication mobile (110,120) n'est pas disponible de sorte qu'un signal de demande d'autorisation ou une notification de transaction ne puisse pas être envoyée immédiatement à un autre dispositif associé à au moins un utilisateur administratif ;
en utilisant au moins une restriction de transaction accédée, déterminer (420) si un ensemble de données de transactions représentant les termes de transactions proposés est autorisée, dans lequel une transaction est autorisées quand toutes ou certaines des restrictions de transactions incluant la condition non sans fil sont remplies ; et
si la transaction est autorisée, transmettre (430) à une ressource de traitement de paiement en réseau des données représentant des termes associés à l'ensemble de données de transaction et une demande de paiement.

2. Procédé selon la revendication 1, dans lequel au moins une restriction de transaction dans la mémoire sécurisée du dispositif de communication mobile (110,120) peut être modifiée au moyen d'une transmission de signal sans fil.

3. Procédé selon la revendication 2, dans lequel la transmission de signal sans fil comprend au moins un message SMS.

4. Procédé selon la revendication 2 ou 3, dans lequel la transmission de signal sans fil comprend au moins un message e-mail.

5. Procédé selon une quelconque des revendications 1-4, comprenant de, si la demande de paiement est approuvée par la ressource de traitement de paiement en réseau, envoyer à au moins un utilisateur administratif du dispositif de communication sans fil capable de NFC (110, 120) une notification de transaction.

6. Procédé selon une quelconque des revendications 1-5, dans lequel la détermination (420) qu'un ensemble de données de transactions représentant les termes de transactions proposés est autorisé comprend d'envoyer à au moins un utilisateur administratif un signal de demande d'autorisation et de recevoir un signal d'approbation provenant d'au moins un utilisateur administratif.

7. Procédé selon une quelconque des revendications 1-6, dans lequel au moins une restriction de transaction comprend au moins un montant d'achat maximal.

8. Procédé selon une quelconque des revendications 1-7, dans lequel au moins une restriction de transaction comprend au moins un identifiant de vendeur.

9. Procédé selon une quelconque des revendications 1-8, dans lequel au moins une restriction de transaction comprend au moins un montant d'achat maximal associé à au moins un identifiant de vendeur.

10. Procédé selon une quelconque des revendications 1-9, dans lequel au moins une restriction de transaction comprend au moins un identifiant de localisation géographique.

11. Procédé selon une quelconque des revendications 1-10, dans lequel la ressource de traitement de paiement en réseau comprend un système d'administration de compte associé à un compte associé à des fonds utilisés comme paiement pour la transaction proposée.

12. Procédé selon une quelconque des revendications 1-11, dans lequel la demande de paiement comprend des données représentant une information de compte de carte de crédit.

13. Procédé selon une quelconque des revendications 1-12, dans lequel au moins une restriction de transaction comprend au moins un identifiant de produit acheté.

14. Procédé selon une quelconque des revendications 1-13, dans lequel au moins une restriction de transaction comprend au moins un montant d'achat associé à une heure.

15. Procédé selon une quelconque des revendications 1-14, dans lequel au moins une restriction de transaction comprend au moins un jeton d'authentification associé à l'utilisateur autorisé.

16. Dispositif fondé sur une communication de champ propre, NFC, (110,120) comprenant :
une mémoire sécurisée ; et
au moins un processeur (8180,8158,8138,8132(a)) configuré pour mettre en œuvre le procédé selon une quelconque des revendications 1-15.

17. Support ou supports non transitoires sur lesquels sont mémorisées des instructions lisibles par machine configurées pour amener un processeur (8180, 8158, 8138, 8132(a)) à mettre en œuvre le procédé selon une quelconque des revendications 1-15.
